# DEMANDE DE BREVET EUROPEEN

(11) **EP 1 175 114 A1**
(43) Date de publication de la demande: **23.01.2002**
(21) Numéro de dépôt: 01401898.0
(22) Date de dépôt: 16.07.2001
(51) Int. Cl.: H04Q 7/34, H04Q 7/32

(54) **Outil de test pour réseau de radio-téléphonie cellulaire et notamment pour réseau GSM ou GPRS et réseau DCS, PCS, GSM-R**

(30) Priorité: 17.07.2000 FR 0009303
(71) Demandeur: SAGEM SA, 75116 Paris (FR)
(72) Inventeur: Clement, Didier, 78260 Acheres (FR); Combes, Bernard, 75011 Paris (FR)
(74) Mandataire: Callon de Lamarck, Jean-Robert

(57) **Abrégé**

Outil de test pour réseau de radio- téléphonie cellulaire comportant au moins un terminal mobile de test, ainsi qu'un terminal qui est un instrument d'interface à partir duquel l'utilisateur pilote le test et a accès aux informations de trace qui lui sont renvoyées par le terminal mobile, des moyens de liaison reliant le terminal mobile de test et l'instrument d'interface,
caractérisé en ce que le terminal mobile comporte des moyens pour, lorsque le terminal mobile est en état de veille, détecter la mise en oeuvre d'un processus de re-sélection de cellule et transmettre au terminal d'interface une information de trace se rapportant à cette mise en oeuvre.

## Description

La présente invention est relative aux outils de test pour réseau de radio-téléphonie cellulaire et notamment pour réseau GSM ou GPRS et réseau DCS, PCS, GSM-R.

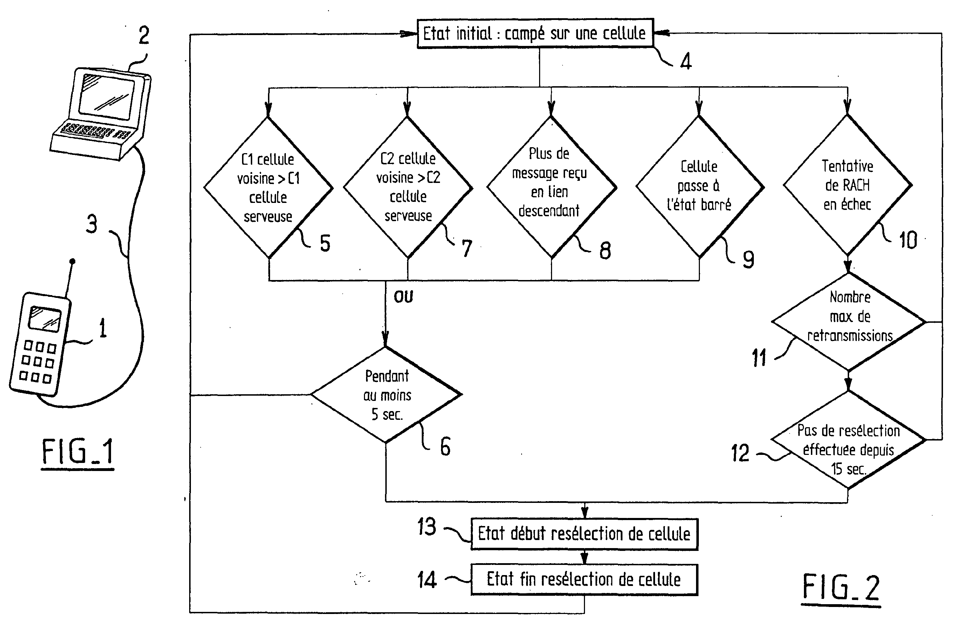

Les opérateurs de télécommunications utilisent classiquement pour tester fonctionnellement les réseaux GSM et mettre en oeuvre des mesures de couverture de réseau et de qualité de services des systèmes dits outils de test, comportant, ainsi que l'illustre la figure 1 :
- au moins un terminal mobile de test 1,
- un terminal 2 qui est un instrument d'interface à partir duquel l'utilisateur pilote le test et a accès aux informations de trace qui lui sont renvoyées par le terminal mobile, ce terminal 2 étant relié au terminal mobile de test 1 par une liaison série 3.

Un but de l'invention est d'améliorer encore les outils de test connus à ce jour.

On sait que dans un réseau de téléphonie cellulaire, le terminal mobile sélectionne une cellule, qui est celle dans laquelle il se trouve ou une cellule voisine, les communications établies avec ledit terminal transitant par les balises de ladite cellule.

Lorsqu'un usager se déplace et change de cellule, le terminal est amené à gérer le changement de cellule. Il effectue alors une opération dite de re-sélection.

On connaît déjà des outils de test qui permettent à un opérateur de visualiser des changements de cellules au cours d'une communication téléphonique.

L'invention propose quant à elle un outil de test pour réseau de radio- téléphonie cellulaire comportant au moins un terminal mobile de test, ainsi qu'un terminal qui est un instrument d'interface à partir duquel l'utilisateur pilote le test et a accès aux informations de trace qui lui sont renvoyées par le terminal mobile, des moyens de liaison reliant le terminal mobile de test et l'instrument d'interface,
caractérisé en ce que le terminal mobile comporte des moyens pour, lorsque le terminal mobile est en état de veille, détecter la mise en oeuvre d'un processus de re-sélection de cellule et transmettre au terminal d'interface une information de trace se rapportant à cette mise en oeuvre.

Avantageusement, le terminal mobile et/ou le terminal d'interface comporte(nt) des moyens pour déterminer la durée d'un processus de re-sélection de cellule.

Notamment, dans un mode de réalisation préféré, le terminal mobile comporte des moyens pour transmettre au terminal d'interface une trace qui comporte une information relative à la valeur courante de son compteur de trame à accès multiple à répartition dans le temps en début et en fin de processus de re-sélection et le terminal d'interface comporte des moyens pour déterminer le durée du processus de re-sélection en fonction des informations qui lui sont ainsi transmises.

L'invention concerne en outre le terminal mobile d'un outil de test pour réseau de radio- téléphonie cellulaire du type précité.

Comme on l'aura compris, l'invention trouve en particulier avantageusement application dans le cas de réseau GSM ou GPRS.

Par ailleurs, l'invention concerne également un procédé de test pour réseau de radio- téléphonie cellulaire, notamment pour réseau GSM ou GPRS au moyen d'un outil de test comportant au moins un terminal mobile de test, ainsi qu'un terminal qui est un instrument d'interface à partir duquel l'utilisateur pilote le test et a accès aux informations de trace qui lui sont renvoyées par le terminal mobile, des moyens de liaison reliant le terminal mobile de test et l'instrument d'interface,
caractérisé en ce que, lorsque le terminal mobile est en état de veille, on détecte la mise en oeuvre d'un processus de re-sélection de cellule et on transmet au terminal d'interface une information de trace se rapportant à cette mise en oeuvre.

Selon un mode de mise en oeuvre préféré, on détermine la durée d'un processus de re-sélection de cellule.

Notamment, le terminal mobile transmet une trace qui comporte une information relative à la valeur courante de son compteur de trame à accès multiple à répartition dans le temps en début et en fin de processus de re-sélection, déterminant la durée du processus de re-sélection en fonction des informations ainsi transmises.

D'autres caractéristiques et avantages de l'invention ressortiront encore de la description qui suit, laquelle est purement illustrative et non limitative et doit être lue en regard des dessins annexés sur lesquels :
- la figure 1, déjà analysée, illustre un système de test conforme à un mode de réalisation connu pour la téléphonie GSM ;
- la figure 2 est un organigramme illustrant un processus de re-sélection de cellules.
   On a résumé à titre d'exemple sur la figure 2 les conditions d'un changement de cellules dans le cas particulier d'un réseau GSM.
   On pourra à cet égard avantageusement se reporter à la recommandation GSM 05.08, qui décrit de façon détaillée les conditions et critères de re-sélection.
   Dans un réseau GSM, un terminal mobile qui est en état de veille et qui a sélectionné une cellule (état 4 sur la figure 2) active le processus de re-sélection dans les cas suivants
- si le signal reçu est affaibli de façon trop importante (critère dit C1) (condition 5 sur la figure 2) pendant au moins cinq secondes (condition 6),
- si on ne reçoit plus de messages sur le lien descendant pendant au moins cinq secondes (condition 7),
- si la cellule sélectionnée passe dans l'état barré pendant au moins cinq secondes (condition 8),
- si une cellule apparaît meilleure pendant au moins cinq secondes (utilisation du critère dit C₂) (condition 9),
- si une tentative d'émission sur le canal à accès aléatoire (canal RACH) est infructueuse (condition 10) après le nombre maximum de transmissions autorisé (condition 11). Dans ce cas, la re-sélection ne doit pas être réalisée si une re-sélection a déjà été effectuée dans les quinze secondes précédentes (condition 12).

Un terminal mobile d'un outil de test conforme à un mode de réalisation possible de l'invention intègre des moyens logiciels aptes à détecter le début et la fin du processus de re-sélection de cellule.

Notamment, ces informations de début et fin du processus de re-sélection sont détectées par analyse des échanges de couche L1.

Pour une définition de la couche L1, on pourra avantageusement se référer aux documents définissant les normes GSM.

L'outil de test (terminal mobile 1 et/ou terminal d'interface 2) comporte en outre des moyens lui permettant de déterminer la durée du temps de re-sélection de cellule.

Par exemple, pour chaque re-sélection de cellule, le terminal mobile de test 1 transmet par la liaison série 3 au terminal d'interface 2 une trace qui comporte une information relative à la valeur courante de son compteur de trame TDMA (trame à accès multiple à répartition dans le temps) en début et en fin de processus de re-sélection (étapes 13 et 14 sur la figure 2) et le terminal 2 détermine le durée du processus de re-sélection en fonction des informations qui lui sont ainsi transmises.

Ainsi, le terminal 2 peut estimer la durée du processus de re-sélection de cellule avec la précision temporelle d'une trame TDMA, à savoir, 4.6152ms.

On notera que les terminaux mobiles GSM intègrent tous un compteur de trame TDMA, lequel permet d'assurer la synchronisation avec la cellule serveuse.

Ainsi, le terminal 2 d'interface de l'outil de test transmet à l'utilisateur des informations de traces qui lui indiquent notamment le début et la fin d'un processus de re-sélection, les valeurs du compteur de trame TDMA au début et à la fin de ce processus, la durée du processus de re-sélection, etc..

Comme on l'aura compris, un exemple possible de réalisation de l'invention a été ici décrit dans le cas d'un outil de test GSM, mais l'invention s'applique de façon générale à tout outil de test pour réseau de radio-téléphonie cellulaire.

## Revendications

1. Outil de test pour réseau de radio- téléphonie cellulaire comportant au moins un terminal mobile de test, ainsi qu'un terminal qui est un instrument d'interface à partir duquel l'utilisateur pilote le test et a accès aux informations de trace qui lui sont renvoyées par le terminal mobile, des moyens de liaison reliant le terminal mobile de test et l'instrument d'interface,
**caractérisé en ce que** le terminal mobile comporte des moyens pour, lorsque le terminal mobile est en état de veille, détecter la mise en oeuvre d'un processus de re-sélection de cellule et transmettre au terminal d'interface une information de trace se rapportant à cette mise en oeuvre.

2. Outil de test selon la revendication 1, **caractérisé en ce que** le terminal mobile et/ou le terminal d'interface comporte(nt) des moyens pour déterminer la durée d'un processus de re-sélection de cellule.

3. Outil de test selon la revendication 2, **caractérisé en ce que** le terminal mobile comporte des moyens pour transmettre au terminal d'interface une trace qui comporte une information relative à la valeur courante de son compteur de trame à accès multiple à répartition dans le temps en début et en fin de processus de re-sélection et **en ce que** le terminal d'interface comporte des moyens pour déterminer le durée du processus de re- sélection en fonction des informations qui lui sont ainsi transmises.

4. Outil de test pour réseau GSM ou GPRS, **caractérisé en ce qu'**il est constitué par un outil selon l'une des revendications précédentes.

5. Terminal mobile pour outil de test pour réseau de radio-téléphonie cellulaire,
**caractérisé en ce qu'**il comporte des moyens pour, lorsqu'il est en état de veille, détecter la mise en oeuvre d'un processus de re-sélection de cellule et transmettre à un terminal d'interface auquel il est relié une information de trace se rapportant à cette mise en oeuvre.

6. Terminal mobile pour outil de test selon la revendication 5, **caractérisé en ce qu'**il comporte des moyens pour transmettre au terminal d'interface une trace qui comporte une information relative à la valeur courante de son compteur de trame à accès multiple à répartition dans le temps en début et en fin de processus de re-sélection.

7. Terminal mobile pour outil de test pour réseau GSM ou GPRS, **caractérisé en ce qu'**il est constitué par un terminal mobile selon l'une des revendications 5 ou 6.

8. Procédé de test pour réseau de radio- téléphonie cellulaire, notamment pour réseau GSM ou GPRS au moyen d'un outil de test comportant au moins un terminal mobile de test, ainsi qu'un terminal qui est un instrument d'interface à partir duquel l'utilisateur pilote le test et a accès aux informations de trace qui lui sont renvoyées par le terminal mobile, des moyens de liaison reliant le terminal mobile de test et l'instrument d'interface,
**caractérisé en ce que**, lorsque le terminal mobile est en état de veille, on détecte la mise en oeuvre d'un processus de re-sélection de cellule et on transmet au terminal d'interface une information de trace se rapportant à cette mise en oeuvre.

9. Procédé selon la revendication 8, **caractérisé en ce qu'**on détermine la durée d'un processus de re-sélection de cellule.

10. Procédé selon la revendication 9, **caractérisé en ce que** le terminal mobile transmet une trace qui comporte une information relative à la valeur courante de son compteur de trame à accès multiple à répartition dans le temps en début et en fin de processus de re-sélection et **en ce qu'**on détermine la durée du processus de re-sélection en fonction des informations ainsi transmises.
